# EUROPÄISCHE PATENTSCHRIFT

(11) **EP 2 978 553 B1**
(45) Veröffentlichungstag und Bekanntmachung des Hinweises auf die Patenterteilung: **23.10.2019**
(21) Anmeldenummer: 14711239.5
(22) Anmeldetag: 18.03.2014
(51) Int. Cl.: B23G 5/04, B23G 5/18, B23C 5/22

(54) **SCHNEIDKLUPPE UND HALTER FÜR DIE SCHNEIDKLUPPE**
DIE STOCK AND HOLDER FOR THE DIE STOCK
FILIÈRE ET SUPPORT POUR LA FILIÈRE

(30) Priorität: 26.03.2013 DE 102013103089
(43) Veröffentlichungstag der Anmeldung: 03.02.2016
(73) Patentinhaber: Hartmetall-Werkzeugfabrik Paul Horn GmbH, 72072 Tübingen (DE)
(72) Erfinder: VOEGE, Rüdiger, 72116 Mössingen (DE)
(74) Vertreter: Witte, Weller & Partner Patentanwälte mbB
(86) Internationale Anmeldenummer: PCT/EP2014/055403
(87) Internationale Veröffentlichungsnummer: WO 2014/154532

(56) Entgegenhaltungen:
- WO-A1-2012/117033
- DE-A1-102005 010 145
- DE-A1-102009 038 133
- DE-U1-202012 103 423
- US-A- 2 174 467
- US-A- 2 378 951
- US-A- 3 629 887
- US-B2- 6 877 934

## Beschreibung

Die vorliegende Erfindung betrifft eine Schneidkluppe gemäß dem Oberbegriff des Anspruchs 1 mit einem im Wesentlichen zylindrischen Halter, welcher zu einer zentrischen, in Axialrichtung verlaufenden Halterlängsachse symmetrisch ist und mehrere Aufnahmenuten zur Aufnahme jeweils eines Schneideinsatzes und jeweils eines Klemmkeils aufweist, wobei sich jede dieser Aufnahmenuten von einer quer zur Axialrichtung verlaufenden ersten Stirnfläche des Halters aus in Axialrichtung und von einer auf die Halterlängsachse zuweisenden Innenseite des Halters aus in Radialrichtung erstrecken, wobei mehrere in den Aufnahmenuten lösbar angeordnete Schneideinsätze vorgesehen sind, wobei jeder Schneideinsatz an einer im Wesentlichen auf die Halterlängsachse zuweisenden Vorderseite mindestens eine Schneide aufweist, wobei mehrere in den Aufnahmenuten lösbar angeordnete Klemmkeile zum axialen und radialen Fixieren der Schneideinsätze vorgesehen sind, wobei pro Aufnahmenut jeweils ein Klemmkeil und ein Schneideinsatz vorgesehen ist, wobei die Klemmkeile in Umfangsrichtung, welche quer zur Axialrichtung und Radialrichtung verläuft, seitlich neben den Schneideinsätzen in der jeweiligen Aufnahmenut angeordnet sind, wobei im Inneren der Klemmkeile jeweils ein Innengewinde vorgesehen ist, und wobei je Aufnahmenut eine Schraube vorgesehen ist zum Befestigen der Klemmkeile und Schneideinsätze in der jeweiligen Aufnahmenut, wobei die Schrauben jeweils ein Außengewinde aufweisen, das mit den im Inneren der Klemmkeile vorgesehenen Innengewinden korrespondiert, so dass die Schrauben mit den Klemmkeilen verschraubbar sind, um die Klemmkeile am Halter zu fixieren. Die vorliegende Erfindung betrifft ferner einen Halter für eine solche Schneidkluppe.

Eine gattungsgemäße Schneidkluppe der oben genannten Art ist bereits aus der US 6 877 934 B2 bekannt. Weitere beispielhafte Schneidkluppen sind aus der DE 10 2009 038 133 A1 sowie der WO 2012/117033 A1 bekannt.

Schneidkluppen, oft auch als Schneideisen bezeichnet, werden vielfach zur spanenden Herstellung von Außengewinden eingesetzt und sind in verschiedenen Ausgestaltungen bekannt. In einer Ausgestaltung sind Schneidkluppen einstückig als HSS (High Speed Steel; Schnellarbeitsstahl)-Werkzeug ausgeführt. Diese sind zwar kostengünstig herzustellen, aber in der Leistung begrenzt und unwirtschaftlich aufgrund geringer Schnittdaten. Ferner muss bei Beschädigung einer Schneide die gesamte Schneidkluppe ausgetauscht werden.

Des Weiteren sind Schneidkluppen bekannt, die vollständig aus Hartmetall als einstückiges Werkzeug hergestellt sind. Diese bieten eine bessere Leistung, sind aber sehr teuer und aufwändig in der Herstellung.

Darüber hinaus sind Schneidkluppen mit austauschbaren Schneideinsätzen bekannt. Diese weisen jedoch grundsätzlich aufgrund der Bauraumverhältnisse weniger Schneideinsätze auf als die oben genannten HSS-Schneidkluppen und Hartmetall-Schneidkluppen. Zudem bieten sie meist, bedingt durch den erforderlichen Platz zum Einsetzen der Schneideinsätze, eine ungünstige Stabilität des Werkzeugs. Beispiele hierfür sind aus der US 2,174,467 A, der US 2,152,567 A sowie aus der GB 406,892 A bekannt. Das Handling zum Austausch der Schneideinsätze ist bei diesen Schneidkluppen jedoch relativ aufwändig. Auch die Positionierung der einzelnen Schneideinsätze relativ zueinander scheint hierbei durchaus komplex zu sein. Ein weiteres Hauptproblem besteht darin, einen möglichst stabilen und exakt definierten Plattensitz der Schneideinsätze im Schneidkluppen-Halter zu garantieren. Hiervon kann bei den zuletzt genannten Beispielen jedoch nicht ausgegangen werden.

Der vorliegenden Erfindung liegt daher die Aufgabe zugrunde, eine alternative Schneidkluppe bereitzustellen, bei der die austauschbaren Schneideinsätze einfach montiert und demontiert werden können, dabei ein sicherer Plattensitz garantiert ist, und zudem verbesserte Bearbeitungseigenschaften ermöglicht werden.

Diese Aufgabe wird ausgehend von der eingangs erwähnten Schneidkluppe dadurch gelöst, dass die Schrauben von einer der ersten Stirnseite des Halters gegenüberliegenden zweiten Stirnseite des Halters in Bohrungen im Halter einsetzbar sind.

Ferner wird diese Aufgabe hinsichtlich des Halters durch einen Halter für eine solche Schneidkluppe gelöst, wobei der Halter:
- im Wesentlichen zylindrisch ist und zu einer zentrischen, in Axialrichtung verlaufenden Halterlängsachse symmetrisch ist,
- mehrere Aufnahmenuten zur Aufnahme jeweils eines Schneideinsatzes und jeweils eines Klemmkeils aufweist, wobei sich jede dieser Aufnahmenuten von einer quer zur Axialrichtung verlaufenden ersten Stirnfläche des Halters aus in Axialrichtung und von einer auf die Halterlängsachse zuweisenden Innenseite des Halters aus in Radialrichtung erstrecken,
- mehrere in den Aufnahmenuten lösbar angeordnete Klemmkeile zum axialen und radialen Fixieren der Schneideinsätze aufweist, wobei pro Aufnahmenut jeweils ein Klemmkeil vorgesehen ist, wobei die Klemmkeile in Umfangsrichtung, welche quer zur Axialrichtung und Radialrichtung verläuft, seitlich neben den Schneideinsätzen in der jeweiligen Aufnahmenut anordenbar sind, wobei im Inneren der Klemmkeile jeweils ein Innengewinde vorgesehen ist und
- ein Haltemittel je Aufnahmenut zum Befestigen der Klemmkeile in der jeweiligen Aufnahmenut aufweist, wobei die Schrauben jeweils ein Außengewinde aufweisen, das mit den im Inneren der Klemmkeile vorgesehenen Innengewinden korrespondiert, so dass die Schrauben mit den Klemmkeilen verschraubbar sind, um die Klemmkeile am Halter zu fixieren, wobei die Schrauben von einer der ersten Stirnseite des Halters gegenüberliegenden zweiten Stirnseite des Halters in Bohrungen im Halter einsetzbar sind.

Durch die Verwendung der oben beschriebenen Klemmkeile wird ein optimaler Plattensitz erreicht. Die Klemmkeile sorgen dabei für eine Keilverspannung der einzelnen Schneideinsätze. Hierdurch wird beim Anziehen der Haltemittel jeweils ein selbsthemmender Kraftschluss zwischen dem Schneideinsatz, dem jeweiligen Klemmkeil und der jeweiligen Aufnahmenut erzeugt, welcher die einzelnen Schneideinsätze axial und radial in der jeweiligen Aufnahmenut fixiert. Ein unbeabsichtigtes Herauslösen der fix eingesetzten Schneideinsätze während der Bearbeitung ist dadurch praktisch unmöglich. Die Verspannung der einzelnen Schneideinsätze ist demzufolge extrem stabil.

Im Unterschied zu den oben genannten, aus dem Stand der Technik bekannten Schneidkluppen drücken die Klemmkeile nicht wie üblich in Axialrichtung von oben auf die Schneideinsätze, Die erfindungsgemäßen Klemmkeile sind nämlich in Umfangsrichtung, also quer zur Axial- und Radialrichtung, seitlich neben den Schneideinsätzen in der jeweiligen Aufnahmenut angeordnet. Das Wort "quer" wird diesbezüglich vorzugsweise als orthogonal verstanden, Im Gegensatz zu axial von oben auf die Schneideinsätze aufgesetzten Klemmkeilen ermöglichen solche seitlichen neben den Schneideinsätzen angeordneten Klemmkeile eine verbesserte Fixierung der Schneideinsätze in den Aufnahmenuten sowohl in Axialrichtung als auch in Radialrichtung.

Ein weiterer Vorteil der erfindungsgemäßen Klemmkeile sowie deren Anordnung seitlich neben den Schneideinsätzen besteht darin, dass hierdurch Fertigungstoleranzen der Schneideinsätze in einfacher Art und Weise ausgeglichen werden können. Je nach Form und Anzug der Klemmkeile lassen sich dadurch nämlich geringe Abstandstoleranzen in axialer und radialer Richtung ausgleichen. Bei Klemmplatten, welche in Axialrichtung von oben auf die Schneideinsätze gedrückt werden, ist dies eher nicht möglich.

Die oben genannte Aufgabe ist daher vollständig gelöst.

Gemäß einer bevorzugten Ausgestaltung weisen die Schneideinsätze jeweils orthogonal zur Axialrichtung ein Querschnittsprofil auf, welches sich ausgehend von der Vorderseite entlang der Radialrichtung nach außen hin keilförmig aufweitet.

Das genannte Querschnittsprofil wird also bei den eingespannten Schneideinsätzen mit zunehmendem Abstand von der Halterlängsachse breiter. Vorzugsweise weitet sich das Querschnittsprofil in dieser Richtung (Radialrichtung) kontinuierlich auf. Hierdurch entstehen planare Seiten- bzw. Anlageflächen an den Schneideinsätzen, welche im in den Halter eingespannten Zustand vorzugsweise parallel zur Halterlängsachse verlaufen. In eingespanntem Zustand liegt eine dieser Anlageflächen an einer korrespondierenden, planaren Anlagefläche der Aufnahmenut an. Die gegenüberliegende, schräg (also unter einem definierten Winkel) dazu verlaufende Anlagefläche liegt dagegen an einer planaren Anlagefläche des jeweiligen Klemmkeils an, welcher in derselben Aufnahmenut angeordnet ist.

An dieser Stelle sei auch darauf hingewiesen, dass es bei dem erfindungsgemäßen Aufbau grundsätzlich auch möglich wäre, mehrere Schneideinsätze oder mehrere Klemmkeile in der gleichen Aufnahmenut anzuordnen. Vorzugsweise ist es jedoch vorgesehen, dass jeweils nur ein Schneideinsatz und ein Klemmkeil in jeder Aufnahmenut angeordnet sind.

In einer weiteren Ausgestaltung ist es vorgesehen, dass sich die Aufnahmenutzen jeweils ausgehend von der Innenseite des Halters entlang der Radialrichtung mit zunehmendem Abstand von der Halterlängsachse keilförmig aufweiten. Zudem verjüngen sich die Aufnahmenuten dabei bevorzugt jeweils ausgehend von der ersten Stirnfläche des Halters (welche orthogonal zur Axialrichtung verläuft) entlang der Axialrichtung keilförmig.

Entsprechend dazu ist es auch vorgesehen, dass sich die Klemmkeile jeweils von der ersten Stirnfläche des Halters aus betrachtet entlang der Axialrichtung keilförmig verjüngen und sich jeweils ausgehend von der Innenseite des Halters entlang der Radialrichtung nach außen hin keilförmig aufweiten.

Durch diese Ausgestaltung wird also eine Art Doppelkeil erzeugt. Wie oben beschrieben, sind die Klemmkeile wie auch die Aufnahmenuten nämlich sowohl in Axialrichtung als auch in Radialrichtung betrachtet keilförmig ausgestaltet. Hierdurch werden die Schneideinsätze beim Anziehen der Haltemittel automatisch sowohl in Axialals auch in Radialrichtung in den Halter geklemmt. In keiner der beiden Richtungen ist ein Herauslösen der Schneideinsätze möglich. Wie weiterhin oben beschrieben, sind die Schneideinsätze auch in Umfangsrichtung (orthogonal zur Axial- und Radialrichtung) fix zwischen der jeweiligen Aufnahmenut und dem jeweils darin angeordneten Klemmkeil eingespannt.

Gemäß einer weiteren bevorzugten Ausgestaltung sind die Schneideinsätze unterschiedlich ausgestaltet. Die Schneideinsätze weisen dabei bevorzugt unterschiedliche Schneidengeometrien auf, und zwar derart, dass die Schneiden der einzelnen Schneideinsätze jeweils unterschiedliche Umfangssegmente eines Gewindes bilden.

Grundsätzlich ließen sich zwar auch identische Schneideinsätze für die erfindungsgemäße Schneidkluppe verwenden. Der Vorteil an der Verwendung unterschiedlicher Schneideinsätze besteht jedoch darin, dass sich die Geometrie eines mit der Schneidkluppe herzustellenden Außengewindes an den Schneideinsätzen dann besser abbilden lässt. Wie bereits erwähnt, sind die Schneideinsätze in Umfangsrichtung am Halter verteilt. Um die Geometrie des herzustellenden Außengewindes an den Schneideinsätzen noch besser abzubilden, ist es daher vorteilhaft, dass die Schneidengeometrie der einzelnen Schneideinsätze entsprechend der Position der jeweiligen Schneideinsätze im Halter angepasst ist.

Gemäß dieser Ausgestaltung ist es daher wichtig, dass der Benutzer die einzelnen, unterschiedlichen Schneideinsätze in der richtigen Reihenfolge am Halter montiert. Um dies für den Benutzer zu vereinfachen, werden die einzelnen Schneideinsätze sowie die entsprechenden Aufnahmenuten am Halter gekennzeichnet, beispielsweise durch eine Zahlennummerierung.

Im Gegensatz zu der eingangs genannten, in der WO 2012/117033 A1 beschriebenen Schneidkluppe, welche identische Schneideinsätze verwendet, hat die Verwendung unterschiedlicher Schneideinsätze den Vorteil, dass alle Schneideinsätze gleichzeitig mit dem zu bearbeitenden Werkstück in Eingriff kommen können, ohne dass anfangs (beim Anschnitt) nur ein Schneideinsatz mit dem Werkstück in Eingriff gerät. Hierdurch wird also auch die Kraftverteilung auf die einzelnen Schneideinsätze, insbesondere beim Anschnitt, deutlich verbessert.

In einer weiteren bevorzugten Ausgestaltung der erfindungsgemäßen Schneidkluppe weist jeder Schneideinsatz eine Anschnittphase auf, welche im Bereich der ersten Stirnfläche des Halters zu liegen kommt, wenn die Schneideinsätze im Halter angeordnet sind, wobei die Normalenvektoren der Anschnittphasen auf die Halterlängsachse zuweisen und die Anschnittphasen auf einem gemeinsamen imaginären Hüllkegel liegen.

Es versteht sich, dass die oben erwähnten Normalenvektoren lediglich der Beschreibung der räumlichen Lage der Anschnittphasen dienen, also real nicht existieren bzw. sichtbar sind. Die Normalenvektoren der einzelnen Anschnittphasen sollten so ausgerichtet sein, dass diese bei eingespannten Schneideinsätzen die Halterlängsachse schneiden. Anders ausgedrückt heißt dies, dass die Anschnittphasen derart ausgestaltet sind, dass sie in eingespanntem Zustand der Schneideinsätze auf die zentrale Symmetrieachse des Halters zuweisen. Aufgrund der oben beschriebenen unterschiedlichen Schneidengeometrie der einzelnen Schneideinsätze resultieren daraus auch unterschiedliche Anschnittphasen.

Die Anschnittphasen können grundsätzlich auch als Einführschrägen bezeichnet werden. Sie werden vorzugsweise durch planare Flächen gebildet, welche in eingesetztem Zustand der Schneideinsätze schräg zur Halterlängsachse verlaufen. Die Einführschrägen bzw. Anschnittphasen erleichtern das Ansetzen der Schneidkluppe an das Anschnittende des zu bearbeitenden Werkstücks. Dadurch dass die Anschnittphasen der Schneideinsätze, wie oben beschrieben, auf einem gemeinsamen imaginären Hüllkegel liegen, lässt sich das zu bearbeitende Werkstück relativ einfach und positionsexakt an der Schneidkluppe ansetzen (bzw. umgekehrt die Schneidkluppe auch am Werkstück ansetzen). Die Anordnung auf einem gemeinsamen imaginären Hüllkegel verhindert während dieses Vorgangs insbesondere ein Verhaken oder ein unerwünschtes schräges Ansetzen des Werkstücks an der Schneidkluppe (bzw. der Schneidkluppe am Werkstück).

Gemäß einer weiteren Ausgestaltung ist es bevorzugt vorgesehen, dass die Aufnahmenuten identisch sind und jeweils eine quer zur Halterlängsachse verlaufende Auflagefläche zur Auflage des jeweiligen Schneideinsatzes aufweisen, wobei die Auflageflächen auf gleicher axialer Höhe angeordnet sind, und wobei die Schneideinsätze in Axialrichtung jeweils gleich lang sind.

Die genannten Auflageflächen verlaufen vorzugsweise orthogonal zur Halterlängsachse, sie können grundsätzlich jedoch auch schräg dazu verlaufen. Unter "quer" wird hier also wiederum "schräg" bzw. "unter einem definierten Winkel" (nicht parallel) verstanden, vorzugsweise jedoch orthogonal. Trotz der bevorzugten unterschiedlichen Ausgestaltungen der Schneideinsätze weisen diese jedoch eine identische axiale Höhe auf und liegen auf gleicher axialer Höhe am Halter an. Die oberen Enden der einzelnen Schneideinsätze (werkstückseitigen Enden) kommen somit ebenfalls auf gleicher axialer Höhe zu liegen. Beim Anschneiden des Werkstücks wird also jeder Schneideinsatz sofort in Eingriff gebracht, also gleich belastet, so dass sich die einzelnen Schneideinsätze während des Schnittvorgangs gegenseitig stützen.

Die Verschraubung zur Fixierung der Klemmkeile und damit auch der Schneideinsätze erfolgt sozusagen also von unten. Statt Befestigungsplatten wie sonst üblich in Axialrichtung von oben auf die Schneideinsätze zu drücken, werden die erfindungsgemäßen Klemmkeile in entgegengesetzter Richtung in die Aufnahmenuten hineingezogen. Zum einen erlaubt dies eine bessere Dosierung der Klemmkraft sowie eine damit einhergehende exaktere Positionierung der Klemmkeile. Zum anderen spart dies im Bereich der ersten Stirnfläche des Halters (werkstückseitige Stirnfläche des Halters) notwendigen Bauraum, welcher ansonsten für die Schraubenköpfe an dieser Stelle vorzusehen wäre. Im Übrigen wird dadurch auch eine Kollision der Befestigungsmittel mit dem Werkstück effektiv ausgeschlossen.

In einer weiteren Ausgestaltung ist der Halter zweiteilig aufgebaut, weist ein erstes Halterteil auf, in welchem die Aufnahmenuten vorgesehen sind, und weist darüber hinaus ein zweites Halterteil auf, das der Befestigung des Halters an einer Werkstückhalterung dient und mit Hilfe der Befestigungsmittel am ersten Halterteil befestigbar ist.

Wenngleich grundsätzlich ein einteiliger Aufbau des Halters technisch ebenso möglich ist, vereinfacht ein zweiteiliger Aufbau des Halters die Fertigung enorm. Der Halter kann dadurch nämlich mittels Drahterodieren statt mittels des aufwändigeren Senkerodier-Verfahrens hergestellt werden. Dies liegt im Wesentlichen daran, dass das erste Halterteil, in dem die Aufnahmenuten vorgesehen sind, von dem zweiten Halterteil, in welchem Aussparungen für die Schraubenköpfe vorgesehen sind, separiert ist. Die unterschiedlichen Geometrien der beiden Halterteile lassen sich somit separat herstellen. Eine komplex und teuer herzustellende Senkform, welche zur Herstellung eines einteiligen Halters notwendig wäre, kann dadurch entfallen.

Die oben beschriebene Verschraubung von unten übernimmt bei dem vorzugsweise vorgesehenen zweiteiligen Aufbau des Halters mehrere Funktionen. Die Schrauben (Befestigungsmittel) dienen zum einen dem Fixieren der Klemmkeile und damit auch der Schneideinsätze. Zum anderen halten die Schrauben gleichzeitig auch die beiden Teile des Halters zusammen.

In einer weiteren Ausgestaltung ist zur Verbindung der beiden Halterteile miteinander zumindest ein Mitnehmerstift vorgesehen, welcher in einer in Axialrichtung verlaufenden Durchgangsbohrung im Halter passgenau eingesetzt ist.

Statt nur eines Mitnehmerstifts können selbstverständlich auch mehrere solcher Mitnehmerstifte eingesetzt werden. Vorzugsweise werden zwei Mitnehmerstifte eingesetzt. Diese Mitnehmerstifte dienen der Kraftübertragung zwischen den beiden separaten Halterteilen bei einem zweiteiligen Aufbau des Halters. Sie übertragen das Drehmoment von dem zweiten Halterteil, welches in der Werkzeughalterung eingespannt und rotatorisch angetrieben wird, auf das erste Halterteil, an welchem die Schneideinsätze angeordnet sind, mit denen das Werkstück bearbeitet wird. Sie dienen dabei auch der Entlastung der Befestigungsmittel (Schrauben), welche im Falle solcher zusätzlich eingesetzten Mitnehmerstifte lediglich auf Zug und nicht auf Scherung belastet werden. Ein Formschluss zwischen Mitnehmerstiften und Halter eignet sich besser zur Übertragung des Drehmoments als ein Kraftschluss zwischen Schrauben und Halter.

Ausführungsbeispiele der Erfindung sind in der Zeichnung dargestellt und werden in der nachfolgenden Beschreibung näher erläutert. Es zeigen:
- Fig. 1: eine perspektivische Ansicht einer Ausführungsform einer erfindungsgemäßen Schneidkluppe,
- Fig. 2: Draufsichten der in Fig. 1 gezeigten Ausführungsform von oben (Fig. 2a) und unten (Fig. 2b),
- Fig. 3: eine Explosionsdarstellung der in Fig. 1 gezeigten Ausführungsform,
- Fig. 4: perspektivische Ansichten eines ersten Halterteils (Fig. 4a) sowie eines zweiten Halterteils (Fig. 4b) der erfindungsgemäßen Schneidkluppe,
- Fig. 5: einen Satz unterschiedlicher, erfindungsgemäßer Schneideinsätze, welche in der Schneidkluppe zum Einsatz kommen,
- Fig. 6: eine Draufsicht (Fig. 6a) und eine Seitenansicht (Fig. 6b) eines solchen Schneideinsatzes, und
- Fig. 7: eine perspektivische Ansicht (Fig. 7a) und eine Draufsicht von oben (Fig. 7b) eines Klemmkeils zur Befestigung der Schneideinsätze im Halter der erfindungsgemäßen Schneidkluppe.

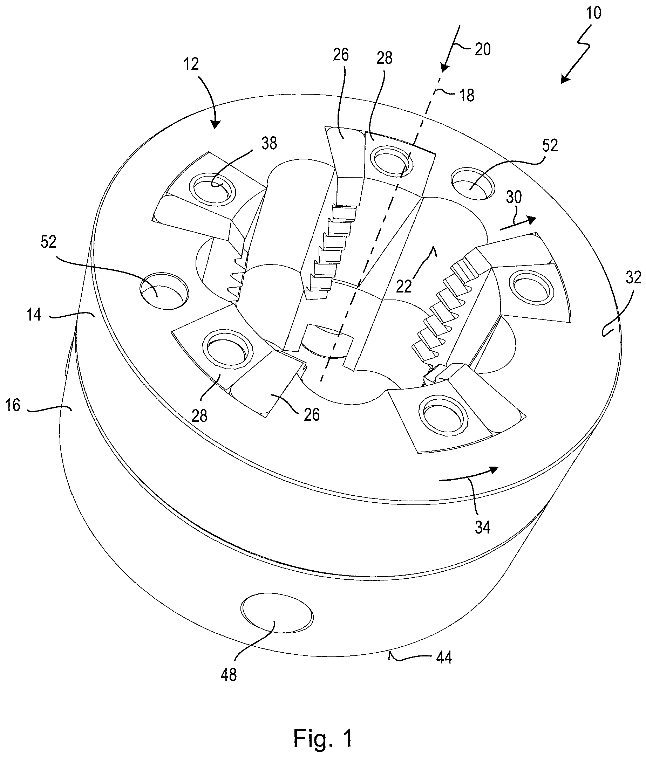

Fig. 1 zeigt eine perspektivische Ansicht einer bevorzugten Ausführungsform der erfindungsgemäßen Schneidkluppe, welche darin gesamthaft mit der Bezugsziffer 10 bezeichnet ist. Die Schneidkluppe 10 weist einen im Wesentlichen zylindrischen Halter 12 auf, der bei dem gezeigten Ausführungsbeispiel zweiteilig ausgestaltet ist und zwei Halterteile, ein erstes Halterteil 14 sowie ein zweites Halterteil 16 umfasst. Grundsätzlich ist auch ein einstückiger Aufbau des Halters 12 denkbar. Ebenso wäre auch ein mehrstückiger Aufbau aus drei oder mehr Teilen möglich.

Die Beschreibung der Form des Halters "im Wesentlichen zylindrisch" bezieht sich vorliegend hauptsächlich auf dessen äußere Kontur. Wie aus den Figuren ersichtlich ist, weicht die innere Kontur des Halters 12 von der zylindrischen Form teilweise ab.

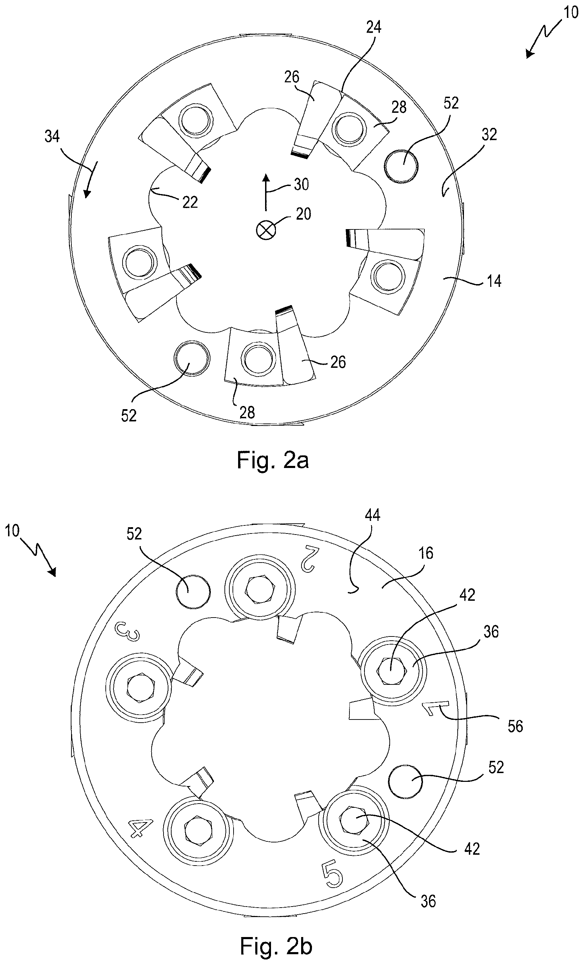

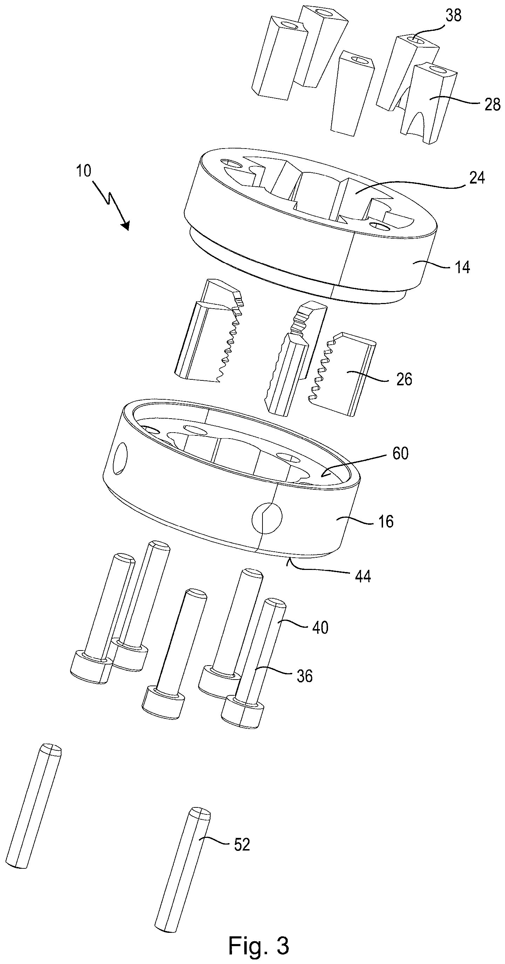

Der Halter 12 der Schneidkluppe 10 ist in Bezug auf eine zentral, in Axialrichtung 20 verlaufende Halterlängsachse 18 symmetrisch aufgebaut. Auf der Innenseite 22 des Halters 12 sind mehrere Aufnahmenuten 24 (bei diesem Ausführungsbeispiel fünf) vorgesehen, welche der Aufnahme jeweils eines Schneideinsatzes 26 und jeweils eines Klemmkeils 28 dienen (siehe beispielsweise Fig. 2a und Fig. 3).

Die Aufnahmenuten 24 erstrecken sich im Wesentlichen jeweils in zwei Richtungen. Zum einen erstrecken sie sich von einer orthogonal zur Halterlängsachse 18 verlaufenden werkstückseitigen Stirnfläche 32 (bezeichnet als erste Stirnfläche 32) des Halters 12 aus in Axialrichtung 20 in den Halter 12 hinein. Zum anderen erstrecken sie sich von der Innenseite 22 des Halters 12 aus betrachtet in Radialrichtung 30 nach außen. Die Aufnahmenuten 24 verjüngen sich dabei jeweils ausgehend von der ersten Stirnfläche 32 des Halters 12 entlang der Axialrichtung 20 keilförmig. Ausgehend von der Innenseite 22 des Halters 12 weiten sie sich dagegen entlang der Radialrichtung 30 mit zunehmendem Abstand von der Halterlängsachse 18 auf.

In den Aufnahmenuten 24 lassen sich die Schneideinsätze 26 lösbar anordnen und mittels jeweils eines Klemmkeils 28 darin fixieren. Wie aus Fig. 1 des Weiteren ersichtlich ist, werden die Klemmkeile 28 dazu in Umfangsrichtung 34, also orthogonal zur Axialrichtung 20 und Radialrichtung 30, seitlich neben den Schneideinsätzen 26 in der jeweiligen Aufnahmenut 24 angeordnet. Es versteht sich, dass die erwähnten Richtungen: Axialrichtung 20, Radialrichtung 30 und Umfangsrichtung 34 jeweils senkrecht zueinander verlaufen.

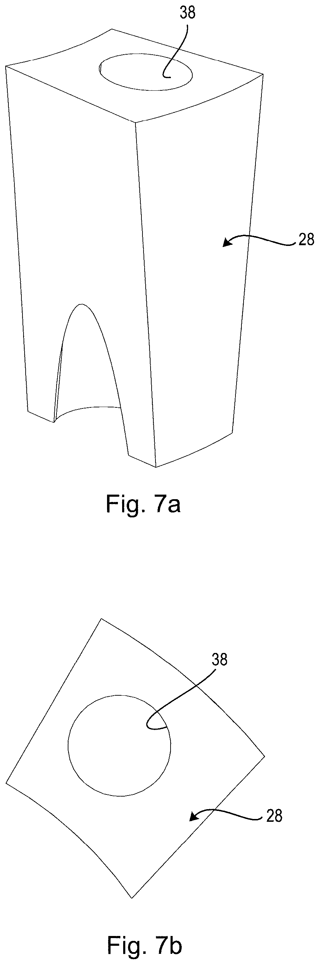

Die Klemmkeile 28 verjüngen sich ebenfalls von der ersten Stirnfläche 32 aus betrachtet entlang der Axialrichtung 20 und weiten sich ausgehend von der Innenseite 22 des Halters 12 aus betrachtet entlang der Radialrichtung 30 nach außen hin keilförmig auf. Die Klemmkeile 28 haben daher die Form eines Doppelkeils (siehe insbesondere Fig. 7a und 7b). Diese Form der Klemmkeile 28 sowie deren Anordnung seitlich neben den Schneideinsätzen 26 garantiert eine Keilverspannung, wodurch die Schneideinsätze 26 sowohl in axialer Richtung 20 als auch in radialer Richtung 30 fixiert werden. Durch diese Keilverspannung entsteht ein selbsthemmender Kraftschluss zwischen den Schneideinsätzen 26, den jeweiligen Klemmkeilen 28 und der jeweiligen Aufnahmenut 24.

Die Klemmkeile 28 lassen sich mit Hilfe von Befestigungselementen 36 (siehe insbesondere Fig. 3) am Halter 12 fixieren. Hierzu ist im Inneren der Klemmkeile 28 jeweils ein Innengewinde 38 vorgesehen, in welches die Befestigungselemente 36 mit entsprechenden, an diesen angebrachten Außengewinden 40 eingreifen können. Wie insbesondere aus Fig. 3 ersichtlich ist, greifen die Befestigungselemente 36 vorliegend vorzugsweise von unten in die jeweiligen Klemmkeile 28 ein.

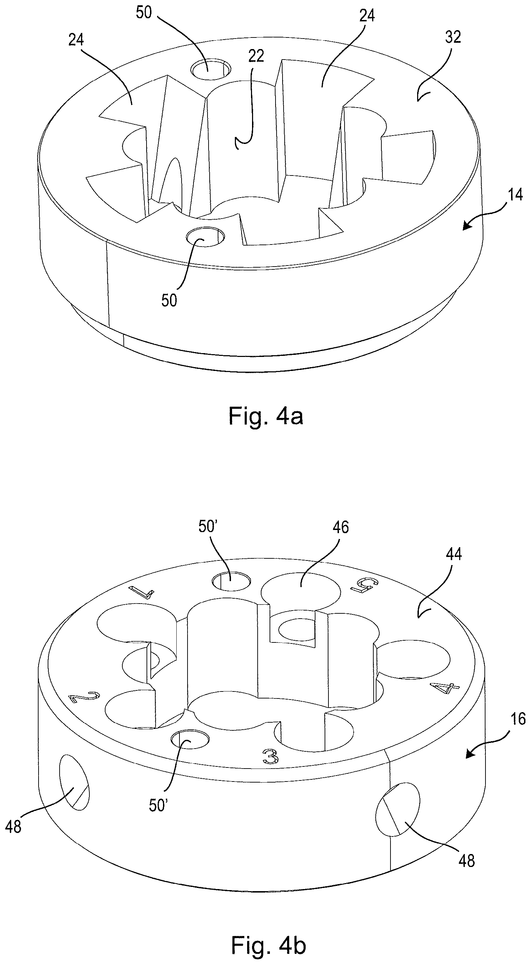

Als Befestigungselemente 36 werden vorzugsweise Spannschrauben verwendet, welche beispielsweise mit einem Innensechskant-Werkzeugeingriff 42 ausgestattet sein können. Es versteht sich, dass jedoch auch andere Werkzeugeingriffe ohne Weiteres möglich sind. Zur Montage der Schneideinsätze 26 und der Klemmkeile 28 werden die Spannschrauben 36 von der am zweiten Halterteil 16 vorgesehenen halterseitigen Stirnfläche 44 (siehe Fig. 2b, 3 und 4b) in den Halter 12 eingesetzt und mit den Klemmkeilen 28 verschraubt. Die genannte zweite Stirnfläche 44 verläuft ebenfalls orthogonal zur Halterlängsachse 18 und liegt der am ersten Halterteil angeordneten ersten Stirnfläche 32 gegenüber. Um die Spannschrauben 36 in montiertem Zustand möglichst vollständig im Halter 12 zu versenken, sind in die zweite Stirnfläche 44 des zweiten Halterteils 16 Senkkopfbohrungen 46 eingebracht (siehe insbesondere Fig. 4b).

Durch die Verschraubung von unten wird also an der werkstückseitigen Stirnfläche 32 kein notwendiger Bauraum für die Spannschrauben 36 benötigt, was sich insbesondere im Hinblick auf zu vermeidende Kollisionen der Schneidkluppe 10 mit dem zu bearbeitenden Werkstück als überaus vorteilhaft erweist. Neben der Funktion des Fixierens der einzelnen Klemmkeile 28 in den Aufnahmenuten 24 halten die Spannschrauben 36 auch die beiden Teile 14, 16 des Halters 12 zusammen.

Ein wesentlicher Vorteil der derartigen Fixierung der Klemmkeile 28 besteht darin, dass sich die Klemmkeile 28 je nach Anzug tiefer oder weniger tief in den Aufnahmenuten 24 hineinziehen lassen. Durch den definierten Formschluss zwischen den Klemmkeilen 28, den Schneideinsätzen 26 sowie der jeweiligen Aufnahmenut 24 ist deren Endposition jedoch exakt definiert. Somit lassen sich auch kleinere Fertigungstoleranzen der Schneideinsätze 26 auf einfache Art und Weise ausgleichen. Aufgrund der Fixierung der Schneideinsätze sowohl in radialer Richtung 30 als auch in axialer Richtung 20 ist ein Herauslösen der Schneideinsätze 26 während des Schneidkluppen-Einsatzes praktisch unmöglich.

Während der Bearbeitung des Werkstücks wird die Schneidkluppe 10 vorzugsweise mit dem zweiten Halterteil 16 in einer Werkzeughalterung, beispielsweise in einem Spannfutter einer Drehmaschine, eingespannt. Zur Vereinfachung der Einspannung sind hierzu umfangsseitig am zweiten Halterteil 16 mehrere Eingriffe 48 angeordnet, welche beispielsweise kegelförmig ausgestaltet sein können. Das bei der Bearbeitung entstehende Drehmoment wird dann von dem zweiten Halterteil 16 auf den ersten Halterteil 14 und letztendlich auf die im ersten Halterteil 14 angeordneten Schneideinsätze 26 übertragen. Um diese Drehmomentübertragung möglichst optimal zu gewährleisten, sind in beiden Halterteilen 14, 16 des Halters 12 fluchtende Durchgangsbohrungen 50, 50' vorgesehen (siehe Fig. 4a und 4b), in welche jeweils ein Mitnehmerstift 52 passgenau eingesetzt ist. Diese Mitnehmerstifte 52 entlasten die Schrauben 36, so dass die Schrauben 36 weitestgehend nur auf Zug (in Axialrichtung 20), jedoch nicht oder nicht so sehr auf Scherung (in Umfangsrichtung 34) belastet werden.

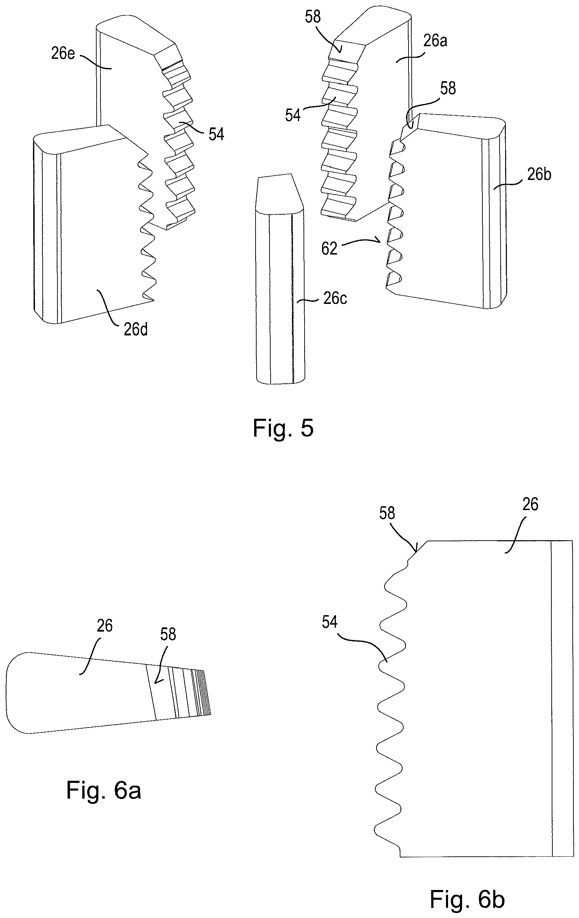

Ein weiterer wesentlicher Punkt der erfindungsgemäßen Schneidkluppe 10 betrifft die Form und Art der Ausgestaltung der Schneideinsätze 26. Vorliegend wird ein Satz von fünf Schneideinsätzen 26 verwendet (siehe Fig. 5). Selbstverständlich wären auch mehr oder weniger Schneideinsätze 26 möglich. Die Schneideinsätze 26 sind im Gegensatz zu den Klemmkeilen 28 und dem Halter 12 vorzugsweise aus Hartmetall. Der Halter 12 und die Klemmkeile 28 sind dagegen vorzugsweise aus Stahl oder HSS. Die Verwendung von Hartmetall für die Schneideinsätze 26 ist insbesondere deshalb vorteilhaft, da es sich bei den Schneideinsätzen 26 um die Hauptverschleißteile der Schneidkluppe 10 handelt.

Bei den Schneideinsätzen 26 handelt es sich vorzugsweise um unterschiedliche, also nicht um identische Schneideinsätze 26. Zwar weisen die Schneideinsätze 26 grundsätzlich gleiche Größenabmessungen (Höhe, Länge, Breite) auf. Jeder Schneideinsatz 26 weist am seiner jeweiligen Vorderseite 62 auch zumindest eine Schneide, vorzugsweise mehrere Schneiden 54 auf. Die Schneidengeometrie unterscheidet sich jedoch von Schneideinsatz zu Schneideinsatz. Zur Differenzierung sind die unterschiedlichen Schneideinsätze in Fig. 5 daher mit den Bezugszeichen 26a-26e bezeichnet.

Die Schneiden 54 der einzelnen Schneideinsätze 26a-26e bilden jeweils unterschiedliche Umfangsegmente eines Gewindes ab. Da die Schneideinsätze 26a-26e alle gleichzeitig mit dem zu bearbeitenden Werkstück in Eingriff treten, ist die Schneidengeometrie der einzelnen Schneideinsätze 26a-26e entsprechend ihrer Position im Halter 12 angepasst. Anders ausgedrückt, würde die Schneidengeometrie der einzelnen Schneideinsätze 26a-26e dadurch entstehen, wenn man aus einem voll-umfänglichen Innengewinde, dessen Kontur dem zu erzeugenden Außengewinde entspricht, die zwischen den Schneideinsätzen 26a-26e liegenden Segmente herausschneidet, so dass nur noch die einzelnen Teilsegmente übrig bleiben, welche als Schneidengeometrie an den einzelnen Schneideinsätzen 26a-26e abgebildet sind. Mit einem solchen Satz von Schneideinsätzen 26a-26e lässt sich ein Außengewinde einfacher erzeugen als mit identischen Schneideinsätzen, wie dies beispielsweise bei der Schneidkluppe aus der WO 2012/117033 A1 der Fall ist. Bei dem darin genannten Werkzeug müssen die identischen Schneideinsätze nämlich höhenmäßig zueinander versetzt werden. Dies bietet insbesondere beim Anschnitt des Werkstücks den Nachteil, dass zunächst nur der zuoberst liegende Schneideinsatz am Werkstück angreift und die gesamte Kraft zunächst nur auf diesen Schneideinsatz wirkt. Dies ist bei dem erfindungsgemäßen Satz von Schneideinsätzen 26a-26e jedoch nicht der Fall. Hier werden die Schnittkräfte direkt ab dem Anschnitt optimal auf alle Schneideinsätze 26a-26e verteilt.

Aufgrund der unterschiedlichen Ausgestaltungen der einzelnen Schneideinsätze 26a-26e ist es daher wichtig, dass die Schneideinsätze 26a-26e in der korrekten Reihenfolge in den Halter 12 bzw. in die entsprechenden Aufnahmenuten 24 eingesetzt werden. Die zeitliche Reihenfolge spielt selbstverständlich keine Rolle, lediglich die örtliche Reihenfolge. Aufgrund der Symmetrie des Halters 12 ist es auch egal, in welche Aufnahmenut 24 beispielsweise der Schneideinsatz 26a eingesetzt wird, solange der Schneideinsatz 26b in die im Uhrzeigersinn nächstfolgende Aufnahmenut 24 eingesetzt wird. Zur Vereinfachung für den Benutzer kann daher erfindungsgemäß, beispielsweise an der werkzeugseitigen Stirnseite 44, eine Zahlenmarkierung 56 (siehe Fig. 2b) angebracht sein.

Ein weiteres Merkmal der Schneideinsätze 26 betrifft die im oberen Teil der Schneideinsätze 26 angebrachten Anschnittphasen 58, welche auch als Einführschrägen bezeichnet werden. Es versteht sich, dass aufgrund der unterschiedlichen Schneidengeometrien der einzelnen Schneideinsätze 26a-26e, sich auch die Größe dieser Anschnittphasen 58 von Schneideinsatz zu Schneideinsatz variiert. Allen Anschnittphasen 58 ist jedoch gemeinsam, dass diese auf die zentrale Halterlängsachse 18 zuweisen, sobald die Schneideinsätze 26a-26e im Halter 12 fixiert sind. Vorzugsweise weisen die Normalenvektoren der einzelnen Anschnittphasen 58 jeweils exakt auf die Halterlängsachse 18 zu. In eingespanntem Zustand der Schneideinsätze 26a-26e liegen diese somit dann auf einem gemeinsamen imaginären Hüllkegel (nicht explizit gezeigt). Dies hat den Vorteil, dass beim Ansetzen der Schneidkluppe 10 an das Werkstück (oder umgekehrt) ein Verkeilen des Werkstücks in der Schneidkluppe 10 wirksam vermieden wird. Das Werkstück wird nämlich aufgrund der auf dem einheitlichen Hüllkegel befindlichen Anschnittphasen 58 sozusagen automatisch zentriert.

Damit die Anschnittphasen 58, wie oben beschrieben, auf einem einheitlichen imaginären Hüllkegel zu liegen kommen, sollte die Höhe der einzelnen Schneideinsätze 26a-26e in Axialrichtung 20 gesehen möglichst gleich sein. Die Schneideinsätze 26a-26e liegen daher auf selbiger Höhe auf der orthogonal zur Halterlängsachse 18 verlaufenden, an der Oberseite des zweiten Halterteils 16 vorgesehenen Auflagefläche 60 auf (siehe insbesondere Fig. 3). Dadurch geraten alle Schneideinsätze 26a-26e beim Anschnitt gleichzeitig mit dem zu bearbeitenden Werkstück in Eingriff.

Zusammenfassend lässt sich also sagen, dass es mit der erfindungsgemäßen Schneidkluppe 10 gelungen ist, insbesondere die Einspannung der Schneideinsätze 26 im Halter 12 zu verbessern. Zudem sind auch die Schnitteigenschaften der Schneidkluppe 10 verbessert worden. Auch das Handling für den Benutzer ist zu großen Teilen einfacher als dies bei den bisher bekannten Schneidkluppen der Fall ist.

## Patentansprüche

1. Schneidkluppe (10) mit:
- einem im Wesentlichen zylindrischen Halter (12), welcher zu einer zentrischen, in Axialrichtung (20) verlaufenden Halterlängsachse (18) symmetrisch ist und mehrere Aufnahmenuten (24) zur Aufnahme jeweils eines Schneideinsatzes (26) und jeweils eines Klemmkeils (28) aufweist, wobei sich jede dieser Aufnahmenuten (24) von einer quer zur Axialrichtung (20) verlaufenden ersten Stirnfläche (32) des Halters (12) aus in Axialrichtung (20) und von einer auf die Halterlängsachse (18) zuweisenden Innenseite (22) des Halters (12) aus in Radialrichtung (30) erstrecken,
- mehreren in den Aufnahmenuten (24) lösbar angeordneten Schneideinsätzen (26), wobei jeder Schneideinsatz (26) an einer im Wesentlichen auf die Halterlängsachse (18) zuweisenden Vorderseite (62) mindestens eine Schneide (54) aufweist,
- mehreren in den Aufnahmenuten (24) lösbar angeordneten Klemmkeilen (28) zum axialen und radialen Fixieren der Schneideinsätze (26), wobei pro Aufnahmenut (24) jeweils ein Klemmkeil (28) und ein Schneideinsatz (26) vorgesehen ist, wobei die Klemmkeile (28) in Umfangsrichtung (34), welche quer zur Axialrichtung (20) und Radialrichtung (30) verläuft, seitlich neben den Schneideinsätzen (26) in der jeweiligen Aufnahmenut (24) angeordnet sind, und wobei im Inneren der Klemmkeile (28) jeweils ein Innengewinde (38) vorgesehen ist, und
- einer Schraube (36) je Aufnahmenut (24) zum Befestigen der Klemmkeile (28) und Schneideinsätze (26) in der jeweiligen Aufnahmenut (24), wobei die Schrauben (36) jeweils ein Außengewinde (40) aufweisen, das mit den im Inneren der Klemmkeile (28) vorgesehenen Innengewinden (38) korrespondiert, so dass die Schrauben (36) mit den Klemmkeilen (28) verschraubbar sind, um die Klemmkeile (28) am Halter (12) zu fixieren
**gekennzeichnet dadurch, dass**
die Schrauben (36) von einer der ersten Stirnseite (32) des Halters (12) gegenüberliegenden zweiten Stirnseite (44) des Halters (12) in Bohrungen (46) im Halter (12) einsetzbar sind.

2. Schneidkluppe nach Anspruch 1, wobei die Schneideinsätze (26) jeweils orthogonal zur Axialrichtung (20) ein Querschnittsprofil aufweisen, welches sich ausgehend von der Vorderseite (62) entlang der Radialrichtung (30) nach außen hin keilförmig aufweitet.

3. Schneidkluppe nach Anspruch 1 oder 2, wobei die Aufnahmenuten (24) sich jeweils ausgehend von der ersten Stirnfläche (32) des Halters (12) entlang der Axialrichtung (20) keilförmig verjüngen und sich jeweils ausgehend von der Innenseite (22) des Halters (12) entlang der Radialrichtung (30) mit zunehmendem Abstand von der Halterlängsachse (18) keilförmig aufweiten.

4. Schneidkluppe nach einem der Ansprüche 1 bis 3, wobei die Klemmkeile (28) sich jeweils von der ersten Stirnfläche (32) des Halters (12) aus betrachtet entlang der Axialrichtung (20) keilförmig verjüngen und sich jeweils ausgehend von der Innenseite (22) des Halters (12) entlang der Radialrichtung (30) nach außen hin keilförmig aufweiten.

5. Schneidkluppe nach einem der Ansprüche 1 bis 4, wobei durch ein Anziehen der Haltemittel (36) jeweils ein selbsthemmender Kraftschluss zwischen den Schneideinsätzen (26), den jeweiligen Klemmkeilen (28) und der jeweiligen Aufnahmenut (24) erzeugt wird, welcher die Schneideinsätze (26) axial und radial in der jeweiligen Aufnahmenut (24) fixiert.

6. Schneidkluppe nach einem der Ansprüche 1 bis 5, wobei die Schneideinsätze (26a-26e) unterschiedlich ausgestaltet sind.

7. Schneidkluppe nach Anspruch 6, wobei die Schneideinsätze (26a-26e) unterschiedliche Schneidengeometrien aufweisen, und zwar derart, dass die Schneiden (54) der einzelnen Schneideinsätze (26a-26e) jeweils unterschiedliche Umfangssegmente eines Gewindes bilden.

8. Schneidkluppe nach einem der Ansprüche 1 bis 7, wobei jeder Schneideinsatz (26) eine Anschnittphase (58) aufweist, welche im Bereich der ersten Stirnfläche (32) des Halters (12) zu liegen kommt, wenn die Schneideinsätze (26) im Halter (12) angeordnet sind, wobei die Normalenvektoren der Anschnittphasen (58) auf die Halterlängsachse (18) zuweisen und die Anschnittphasen (58) auf einem gemeinsamen imaginären Hüllkegel liegen.

9. Schneidkluppe nach einem der Ansprüche 1 bis 8, wobei die Aufnahmenuten (24) identisch sind und jeweils eine quer zur Halterlängsachse (18) verlaufende Auflagefläche (60) zur Auflage des jeweiligen Schneideinsatzes (26) aufweisen, wobei die Auflageflächen (60) auf gleicher axialer Höhe angeordnet sind, und wobei die Schneideinsätze (26) in Axialrichtung (20) jeweils gleich lang sind.

10. Schneidkluppe nach einem der Ansprüche 1 bis 9, wobei der Halter (12) zweiteilig aufgebaut ist, ein erstes Halterteil (14) aufweist, in welchem die Aufnahmenuten (24) vorgesehen sind, und ein zweites Halterteil (16) aufweist, das der Befestigung des Halters (12) an einer Werkzeughalterung dient und mit Hilfe der Schrauben (36) am ersten Halterteil (14) befestigbar ist.

11. Schneidkluppe nach Anspruch 10, wobei zur Verbindung der beiden Halterteile (14, 16) miteinander zumindest ein Mitnehmerstift (52) vorgesehen ist, welcher in einer in Axialrichtung (20) verlaufenden Durchgangsbohrung (50) im Halter (12) passgenau eingesetzt ist.

12. Halter (12) für eine Schneidkluppe (10) nach einem der Ansprüche 1 bis 11, wobei der Halter (12):
- im Wesentlichen zylindrisch ist und zu einer zentrischen, in Axialrichtung (20) verlaufenden Halterlängsachse (18) symmetrisch ist,
- mehrere Aufnahmenuten (24) zur Aufnahme jeweils eines Schneideinsatzes (26) und jeweils eines Klemmkeils (28) aufweist, wobei sich jede dieser Aufnahmenuten (24) von einer quer zur Axialrichtung (20) verlaufenden ersten Stirnfläche (30) des Halters (12) aus in Axialrichtung (20) und von einer auf die Halterlängsachse (18) zuweisenden Innenseite (22) des Halters (12) aus in Radialrichtung (30) erstrecken,
- mehrere in den Aufnahmenuten (24) lösbar angeordnete Klemmkeile (28) zum axialen und radialen Fixieren der Schneideinsätze (26) aufweist, wobei pro Aufnahmenut (24) jeweils ein Klemmkeil (28) vorgesehen ist, wobei die Klemmkeile (28) in Umfangsrichtung (34), welche quer zur Axialrichtung (20) und Radialrichtung (30) verläuft, seitlich neben den Schneideinsätzen (26) in der jeweiligen Aufnahmenut (24) anordenbar sind, und wobei im Inneren der Klemmkeile (28) jeweils ein Innengewinde (38) vorgesehen ist, und
- eine Schraube (36) je Aufnahmenut (24) zum Befestigen der Klemmkeile (28) in der jeweiligen Aufnahmenut (24) aufweist, wobei die Schrauben (36) jeweils ein Außengewinde (40) aufweisen, das mit den im Inneren der Klemmkeile (28) vorgesehenen Innengewinden (38) korrespondiert, so dass die Schrauben (36) mit den Klemmkeilen (28) verschraubbar sind, um die Klemmkeile (28) am Halter (12) zu fixieren, **dadurch gekennzeichnet, dass**
die Schrauben (36) von einer der ersten Stirnseite (32) des Halters (12) gegenüberliegenden zweiten Stirnseite (44) des Halters (12) in Bohrungen (46) im Halter (12) einsetzbar sind.

## Claims

1. A die stock (10) having:
- a substantially cylindrical holder (12), which is symmetrical to a centric holder longitudinal axis (18) that runs in an axial direction (20), wherein the holder (12) has a plurality of receiving grooves (24) each of which is configured for receiving a cutting insert (26) and a clamping wedge (28), wherein each of the receiving grooves (24) extends from a first end face (32) of the holder (12) in the axial direction (20), said first end face (30) running transversely to the axial direction, and wherein each of the receiving grooves (24) extends from an inner side (22) of the holder (12) in a radial direction (30), said inner side (22) facing toward the holder longitudinal axis (18),
- a plurality of cutting inserts (26) arranged detachably in the receiving grooves (24), wherein each cutting insert (26) has, on a front side (62) that faces substantially toward the holder longitudinal axis (18), at least one cutting edge (54),
- a plurality of clamping wedges (28) arranged detachably in the receiving grooves (24) in order to axially and radially fix the cutting inserts (26), wherein one clamping wedge (28) and one cutting insert (26) is provided for each of the receiving grooves (24), respectively, wherein the clamping wedges (28) are, in a peripheral direction (34) that runs transversely to the axial direction (20) and the radial direction (30), arranged alongside the cutting inserts (26) in each of the receiving grooves (24), respectively, and wherein each clamping wedge (28) comprises an internal thread (38), and
- one screw (36) per receiving groove (24), for fastening the clamping wedges (28) and cutting inserts (26) in the receiving grooves (24), wherein each screw (36) comprises an external thread (40) that corresponds to the internal threads (38) provided within the clamping wedges (28), such that the screws (36) may be screwed to the clamping wedges (28) for fastening the clamping wedges to the holder (12),
**characterized in that**
the screws (36) are insertable from a second end side (44) of the holder (12) into bores (46) provided in the holder (12), said second end side (44) being arranged opposite the first end side (32) of the holder (12).

2. The die stock as claimed in claim 1, wherein each of the cutting inserts (26) has orthogonally to the axial direction (20) a cross-sectional profile which, starting from the front side (62), widens along the radial direction (30) outward in a wedge-shaped manner.

3. The die stock as claimed in claim 1 or 2, wherein each of the receiving grooves (24), starting from the first end face (32) of the holder (12), tapers along the axial direction (20) in a wedge-shaped manner and, starting from the inner side (22) of the holder (12), widens along the radial direction (30) in a wedge-shaped manner, with increasing distance from the holder longitudinal axis (18).

4. The die stock as claimed in one of claims 1 to 3, wherein each of the clamping wedges (28), viewed from the first end face (32) of the holder (12), tapers along the axial direction (20) in a wedge-shaped manner and, starting from the inner side (22) of the holder (12), widens along the radial direction (30) outward in a wedge-shaped manner.

5. The die stock as claimed in one of claims 1 to 4, wherein, by a tightening of the holding means (36), a self-locking force closure is created between the cutting inserts (26), the clamping wedges (28) and the receiving grooves (24), respectively, which force closure fixes the cutting inserts (26) axially and radially in the receiving grooves (24).

6. The die stock as claimed in one of claims 1 to 5, wherein the cutting inserts (26a-26e) are differently configured.

7. The die stock as claimed in claim 6, wherein the cutting inserts (26a-26e) have different cutting edge geometries, such that the cutting edges (54) of the cutting inserts (26a-26e) form different peripheral segments of a thread.

8. The die stock as claimed in one of claims 1 to 7, wherein each cutting insert (26) has an ingate chamfer (58), which is located in a region of the first end face (32) of the holder (12) when the cutting inserts (26) are arranged in the holder (12), wherein the normal vectors of the ingate chamfers (58) point toward the holder longitudinal axis (18) and the ingate chamfers lie on a common imaginary envelope cone (58).

9. The die stock as claimed in one of claims 1 to 8, wherein the receiving grooves (24) are identical, and wherein each of the receiving grooves (24) has a bearing surface (60) that runs transversely to the holder longitudinal axis (18), for supporting one of the cutting inserts (26), wherein the bearing surfaces (60) are arranged at the same axial height, and wherein the cutting inserts (26) are equal in length in the axial direction (20).

10. The die stock as claimed in one of claims 1 to 9, wherein the holder (12) is of two-part construction, has a first holder part (14), in which the receiving grooves (24) are provided, and has a second holder part (16), which serves to fasten the holder (12) to a workpiece fixture and, with the aid of the screws (36), is fastenable to the first holder part (14).

11. The die stock as claimed in claim 10, wherein for the connection of the two holder parts (14, 16) there is provided at least one driving pin (52), which is inserted in a precisely fitting manner in a through hole (50), running in the axial direction (20), in the holder (12).

12. A holder (12) for a die stock (10) as claimed in one of claims 1 to 11, wherein the holder (12):
- is substantially cylindrical and is symmetrical to a centric holder longitudinal axis (18) that runs in an axial direction (20),
- has a plurality of receiving grooves (24) each of which is configured for receiving a cutting insert (26) and a clamping wedge (28), wherein each of the receiving grooves (24) extends from a first end face (30) of the holder (12) in the axial direction (20), said first end face (30) running transversely to the axial direction, and wherein each of the receiving grooves (24) extends from an inner side (22) of the holder (12) in a radial direction (30), said inner side (22) facing toward the holder longitudinal axis (18),
- comprises a plurality of clamping wedges (28) arranged detachably in the receiving grooves (24) in order to axially and radially fix the cutting inserts (26), wherein one clamping wedge (28) is provided for each of the receiving grooves (24), respectively, wherein the clamping wedges (28) may in a peripheral direction (34) be arranged alongside the cutting inserts (26) in each of the receiving grooves (24), respectively, said peripheral direction (34) running transversely to the axial direction (20) and the radial direction (30), and wherein each clamping wedge (28) comprises an internal thread (38), and
- comprises one screw (36) per receiving groove (24), for fastening the clamping wedges (28) in the receiving grooves (24), wherein each screw (36) comprises an external thread (40) that corresponds to the internal threads (38) provided within the clamping wedges (28), such that the screws (36) may be screwed to the clamping wedges (28) for fastening the clamping wedges (28) to the holder (12)
**characterized in that**
the screws (36) are insertable from a second end side (44) of the holder (12) into bores (46) provided in the holder (12), said second end side (44) being arranged opposite the first end side (32) of the holder (12)

## Revendications

1. Filière (10) avec :
- un support (12) pour l'essentiel cylindrique, lequel est symétrique à un axe longitudinal de support (18) central, s'étendant dans la direction axiale (20) et comporte plusieurs rainures de logement (24) pour recevoir respectivement un peigne de coupe (26) et respectivement une cale de serrage (28), sachant que chacune de ces rainures de logement (24) s'étend d'une première surface frontale (32) du support (12) s'étendant transversalement à la direction axiale (20) dans la direction axiale (20) et d'une face intérieure (22) du support (12) tournée vers l'axe longitudinal de support (18) dans la direction radiale (30),
- plusieurs peignes de coupe (26) disposés de façon amovible dans les rainures de logement (24), sachant que chaque peigne de coupe (26) comporte au moins un tranchant (54) sur une face avant (62) tournée pour l'essentiel vers l'axe longitudinal de support (18),
- plusieurs cales de serrage (28) disposées de façon amovible dans les rainures de logement (24) pour la fixation axiale et radiale des peignes de coupe (26), sachant qu'une cale de serrage (28) et un peigne de coupe (26) sont respectivement prévus par rainure de logement (24), sachant que les cales de serrage (28) sont disposées latéralement à côté des peignes de coupe (26) dans la rainure de logement respective (24), en direction périphérique (34), laquelle s'étend transversalement à la direction axiale (20) et à la direction radiale (30), et sachant qu'à l'intérieur des cales de serrage (28) est respectivement prévu un filetage intérieur (38), et
- une vis (36) par rainure de logement (24) pour fixer les cales de serrage (28) et les peignes de coupe (26) dans la rainure de logement respective (24), sachant que les vis (36) comportent respectivement un filetage extérieur (40), qui correspond aux filetages intérieurs (38) prévus à l'intérieur des cales de serrage (28) de telle manière que les vis (36) peuvent être vissées avec les cales de serrage (28) pour fixer les cales de serrage (28) au support (12),
**caractérisée en ce que**
les vis (36) peuvent être introduites dans des trous (46) dans le support (12) par une deuxième face frontale (44) du support (12) opposée à la première face frontale (32) du support (12).

2. Filière selon la revendication 1, les peignes de coupe (26) comportant un profil transversal respectivement orthogonal à la direction axiale (20), lequel s'élargit de façon cunéiforme le long de la direction radiale (30) vers l'extérieur en partant de la face avant (62).

3. Filière selon la revendication 1 ou 2, les rainures de logement (24) se rétrécissant respectivement de façon cunéiforme en partant de la première surface frontale (32) du support (12) le long de la direction axiale (20) et s'élargissant respectivement de façon cunéiforme en partant de la face intérieure (22) du support (12) le long de la direction radiale (30) à une distance croissante de l'axe longitudinal de support (18).

4. Filière selon l'une quelconque des revendications 1 à 3, les cales de serrage (28) se rétrécissant respectivement de façon cunéiforme vues depuis la première surface frontale (32) du support (12) le long de la direction axiale (20) et s'élargissant respectivement de façon cunéiforme vers l'extérieur en partant de la face intérieure (22) du support (12) le long de la direction radiale (30).

5. Filière selon l'une quelconque des revendications 1 à 4, dans laquelle en serrant les moyens de maintien (36) une adhérence autobloquante est respectivement produite entre les peignes de coupe (26), les cales de serrage respectives (28) et la rainure de logement respective (24), laquelle fixe les peignes de coupe (26) de façon axiale et radiale dans la rainure de logement respective (24).

6. Filière selon l'une quelconque des revendications 1 à 5, les peignes de coupe (26a-26e) étant constitués de façon différente.

7. Filière selon la revendication 6, les peignes de coupe (26a-26e) comportant des géométries de coupe différentes et ce de telle manière que les tranchants (54) des peignes de coupe (26a-26e) individuels forment respectivement des segments périphériques différents d'un filetage.

8. Filière selon l'une quelconque des revendications 1 à 7, chaque peigne de coupe (26) comportant un chanfrein d'attaque (58), lequel vient se situer dans la zone de la première surface frontale (32) du support (12), lorsque les peignes de coupe (26) sont disposés dans le support (12), sachant que les vecteurs normaux des chanfreins d'attaque (58) sont tournés vers l'axe longitudinal de support (18) et les chanfreins d'attaque (58) se situent sur un cône enveloppant commun imaginaire.

9. Filière selon l'une quelconque des revendications 1 à 8, les rainures de logement (24) étant identiques et comportant respectivement une surface d'appui (60) s'étendant transversalement à l'axe longitudinal de support (18) pour l'appui du peigne de coupe respectif (26), sachant que les surfaces d'appui (60) sont disposées à la même hauteur axiale et sachant que les peignes de coupe (26) sont respectivement de même longueur dans la direction axiale (20).

10. Filière selon l'une quelconque des revendications 1 à 9, le support (12) étant constitué en deux parties, comportant une première partie de support (14), dans laquelle les rainures de logement (24) sont prévues et comportant une deuxième partie de support (16), qui sert à la fixation du support (12) sur un porte-outils et peut être fixée à l'aide des vis (36) sur la première partie de support (14).

11. Filière selon la revendication 10, au moins une broche d'entraînement (52) étant prévue pour l'assemblage des deux parties de support (14, 16) l'une avec l'autre, laquelle est insérée avec précision dans un trou de passage (50) s'étendant dans la direction axiale (20) dans le support (12).

12. Support (12) pour une filière (10) selon l'une quelconque des revendications 1 à 11, le support (12) :
- étant pour l'essentiel cylindrique et symétrique à un axe longitudinal de support (18) central s'étendant dans la direction axiale (20),
- comportant plusieurs rainures de logement (24) pour recevoir respectivement un peigne de coupe (26) et respectivement une cale de serrage (28), sachant que chacune de ces rainures de logement (24) s'étend d'une première surface frontale (30) du support (12) s'étendant transversalement à la direction axiale (20) dans la direction axiale (20) et d'une face intérieure (22) du support (12) tournée vers l'axe longitudinal de support (18) dans la direction radiale (30),
- comportant plusieurs cales de serrage (28) disposées de façon amovible dans les rainures de logement (24) pour la fixation axiale et radiale des peignes de coupe (26), sachant qu'une cale de serrage (28) est respectivement prévue par rainure de logement (24), sachant que les cales de serrage (28) peuvent être disposées latéralement à côté des peignes de coupe (26) dans la rainure de logement respective (24) en direction périphérique (34), laquelle s'étend transversalement à la direction axiale (20) et à la direction radiale (30), et sachant qu'à l'intérieur des cales de serrage (28) est respectivement prévu un filetage intérieur (38), et
- comportant une vis (36) par rainure de logement (24) pour fixer les cales de serrage (28) dans la rainure de logement respective (24),
sachant que les vis (36) comportent respectivement un filetage extérieur (40), qui correspond aux filetages intérieurs (38) prévus à l'intérieur des cales de serrage (28) de telle manière que les vis (36) peuvent être vissées avec les cales de serrage (28) pour fixer les cales de serrage (28) au support (12),
**caractérisé en ce que**
les vis (36) peuvent être introduites dans des trous (46) dans le support (12) par une deuxième face frontale (44) du support (12) opposée à la première face frontale (32) du support (12).
